# EUROPEAN PATENT SPECIFICATION

(11) **EP 3 663 219 B1**
(45) Date of publication and mention of the grant of the patent: **02.09.2026**
(21) Application number: 19850204.9
(22) Date of filing: 12.09.2019
(51) Int. Cl.: B65D 5/40, B65D 65/40, B65D 30/08, B65D 75/28, B65D 65/46

(54) **PACKAGING**
VERPACKUNG
EMBALLAGE

(30) Priority: 15.08.2018 RU 2018129756
(43) Date of publication of application: 10.06.2020
(73) Proprietor: DoECO USA LLC, Hollywood, FL 33020-3255 (US)
(72) Inventor: Savelev, Dmitrii Viktorovich, Moscow 119454 (RU)
(74) Representative: Plasseraud IP
(86) International application number: PCT/RU2019/000631
(87) International publication number: WO 2020/036515

(56) References cited:
- EP-A1- 1 164 085
- EP-B1- 0 676 335
- WO-A1-03/106277
- WO-A1-2007/135234
- BE-A- 648 218
- FR-A1- 2 791 636
- GB-A- 1 013 656
- GB-A- 1 204 208
- GB-A- 2 126 191
- JP-A- 2005 014 975
- RU-C2- 2 487 065
- RU-C2- 2 529 522
- US-A1- 2010 075 076

## Description

### FIELD OF THE INVENTION

The invention refers to the production of packaging for mainly liquid, fatty and frozen foodstuffs or products containing or releasing fats and moisture.

### BACKGROUD OF THE INVENTION

The most known types of packaging where the claimed invention may be used are paper cups, various containers with round or other bases, packages of various shapes for dairy products, juices and other products where the main shape-forming/frame material is mainly pulp and paper material or any other material requiring protection of the end-face from contact with the contents of the container.

When forming a container, where laminated pulp and paper material are mainly used as the frame material, as well as any other material, that requires protection of the end-face from contact with the contents of the container, there is a problem when, when the material overlap at the joint. The end face at the inner surface without the use of additional methods of protection is unprotected from contact with the contents of the container.

There are several ways to solve this problem:
1. Bending and turning the end face under itself.
2. Application on the end face or in the area of its location of the polymer tape.
3. Use of material with high end-face absorption resistance.

In revealing each of the methods used to date to address the problem of end-face absorption, it is necessary to pay attention to the obvious shortcomings of each of them.

The method of bending or turning under is mainly used in the production of packaging for dairy products and juices. Requires special folding equipment. Due to the increase in the number of layers up to three at the welding/adhesive point at the container walls, the seam has an excessive compaction, which imposes some restrictions on the formation of cups and containers with a round base and a rolled edge.

There is a widely used way to compensate for the excess thickness of the three layers by trimming the bendable edge of the workpiece to reduce the thickness of the tilted edge. However, as a rule, due to the heterogeneity of the material structure in terms of thickness, physical and technical properties of the folded material in the place of bending, it is not possible to keep the same properties comparing to the material bound in one layer without a fold.

Application to the end of the polymer tape. It is a method of end-face protection used by Tetrapack ^{®} in the production of packaging for liquid products. It is a method based on the application of an additional special multi-layer material in the form of a polymeric strip with a reduced elasticity for its application. This method has a significant limitation - it is used to process the web fed material before it is divided into single workpieces. Thus, this method has a limitation in the formation of pre-cut products by pieces.

In addition, as with the previous method, it creates an excessive seam thickness and completely different physical and technical properties compared to the same properties of the material bonded in one layer without additional layers of other materials.

Use of material with high end-face absorption resistance. This method is most widely used in the production of paper cups and containers for food products with a round base, as well as in the production of milk bags and juices with a short shelf life. It is based on the use of pulp and paper raw materials with hydrophobic additives that slow down or prevent long time penetration of liquid, greasy and other products into the end-face part of the material in contact with the contents of the package.

This method does not imply any protection of the end-face by additional methods at all, but is based solely on the properties of the material itself in terms of resistance to end-face absorption.

The main disadvantages of this method are the higher cost of pulp and paper base material, which has the mentioned properties, as well as the impossibility of long-term storage of the product due to direct contact of the food product with the microbiological environment of the end-face of the pulp and paper material.

The main drawbacks in the applied end-face protection methods described and not inherent by this invention are:
1 Excessive thickening of the material at the overlap and end-face protection of the frame material (observed both when bending or turning under the material and when applying polymeric tape). It also complicates further assembly and formation of the finished package.
2. Excessive rigidity of the overlap and end-face protection of the shape-forming/frame material (especially when bending or turning under the material). Complicates further assembly and formation of the finished package. Especially it prevents high-quality rolling of the upper edge of paper cups and round containers.
3. In the case of polymer tape application, the method is known to be used in the course of processing the web fed material before it is divided into single workpieces. Thus, the method of application of polymeric tape has a significant limitation when working with pre-cut products by single pieces.
4 Use of expensive frame material with hydrophobic properties in case of absence of additional methods of face-end protection.

There is a known multi-layer packaging material for a flexible, preferably pillow-shaped packaging container containing an inner paper layer, external liquid-tight layers of polyolefin on both sides of the paper layer, and aluminum foil, which serves as a gas-tight layer and is located between the paper layer and one of the two outer liquid-tight layers. Between the aluminium foil and one of the two external liquid-tight layers, it contains a load-absorbing polyolefin film in contact with the aluminium foil. Foldings of packaging material are formed by means of heat sealing (patent RU 25229522 C2 27.09.2014).

There is a known packaging container, taken as a prototype containing a multilayer forming material consisting of frame and protective layers. The protective layer is contained on the outer and inner surface of the frame material (patent RU 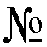 2487065 from 10.07.2013).

However, the difficulty in assembling the known technical solutions due to the multi-layer structure of the material and the way of forming folds, entails a thickening of the material in the places of seams and, as a consequence, the provision of excessive rigidity of packaging, i.e. complication of further assembly and formation of the finished package.
Furthermore, FR 2 791 636 relates to a production of cylindrical sleeve; GB 1 204 208 to production of strip material for containers, and WO 2007/135234 relates to a method for protecting the untrimmed edge of paperboard or paper, in which method the untrimmed edge of two adjacent paperboards are protected and attached abuttingly together by sealing a separate profile on both sides of the abutment of the edges by means of ultrasound. BE 648 218 relates to a tube or a tubular package. EP 1 164 085 relates to a laminated packaging material for paper container.

### SUMMARY OF THE INVENTION

The problem to be solved by the present invention is to simplify the assembly and formation of the a finished package, for achieving a result of protection of the end-face of the package without thickening of the shape-forming material in the place of overlap (seam).

The above stated result is achieved by a packaging according to claim 1.

An additional feature is that the protective layer is made of biodegradable polymer, e.g. polymlactic acid (PLA).

The main idea of this invention is to extend the protective layer beyond the frame material and its subsequent soldering to the protective layer of the mating surface during the formation of the finished package so that the protected end-face of the frame material remains isolated from contact with the food contents of the package.

Extending the protective layer beyond the frame material does not cause thickening of the material at the place of heat sealing with the mating surfaces, as in the conventional case with the imposition of additional polymeric tapes or in some cases of material patching, or changes in technical and mechanical properties, as in the case of bending or patching of the material.

### DRAWINGS OF THE INVENTION

Fig. 1 schematically depicts conventionally known elements of packaging with a protective layer having an unprotected end-face edge;
Fig. 2 schematically depicts a conventionally known method contemplating a bending pattern with compensation for excess layer thickness by trimming the bending edge of the frame material;
Fig. 3 schematically depicts a conventionally known method contemplating application of a polymer tape around the end-face (seam) of the frame material, to protect the end face;
Fig. 4 schematically depicts a conventionally known method contemplating application of a polymer tape partially around the end-face of the frame material and partially along an inner surface of the protective layer, to protect the end face;
Fig. 5 schematically depicts a preferred embodiment of the invention contemplating application of an elongated protective layer of a polymer tape to a mating surface of the frame material, to protect the end face.

### DESCRIPTION OF KNOWN METHODS VERSUS PREFERRED EMBODIMENT OF THE INVENTION

The proposed protection of the end-face of the shape-forming material by extending the protective (lamination) layer and further heat sealing with the adjacent layer during the formation of the a packaging container is explained in the attached drawings wherein:
1 - protective layer;
2 - frame material;
3 - polymer tape;
4 - elongated protective layer;
5 - insulated protected end-face of the frame material.

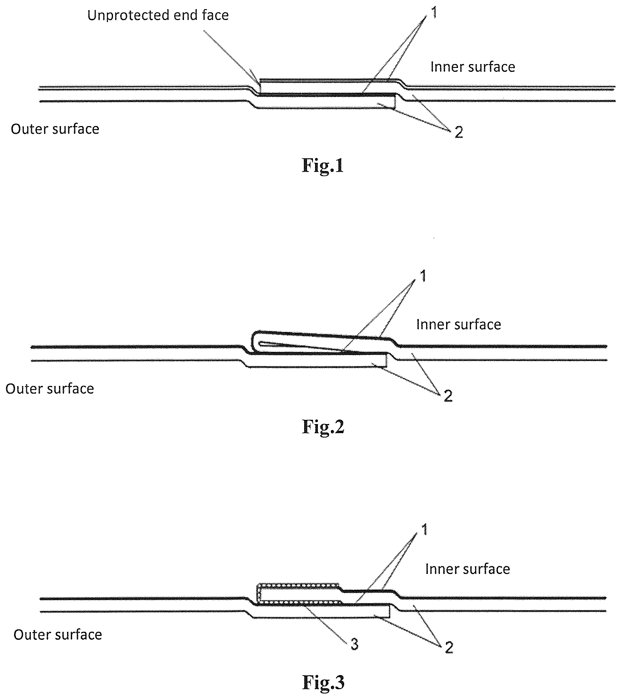

Fig. 1 shows the general characteristics of the problem. When forming a frame package coated/laminated with a protective layer on the inner surface of the package, the bonding of the material creates an unprotected end-face edge (unprotected end-face), which then comes into contact with the contents of the package.

It is also the most commonly used side wall mounting scheme for forming paper cups and food containers with a round base. At their manufacturing the frame material with high indicators of obstruction of end-face absorption is most often used.

Fig. 2 shows a bending or reversal pattern with compensation for excess layer thickness by trimming the bending edge of the workpiece.

Due to the increase in the number of layers up to three at the welding/gluing point of the packing walls, the seam has an excessive compaction, which imposes some restrictions on the formation of glasses and containers with a round base and a rolled edge.

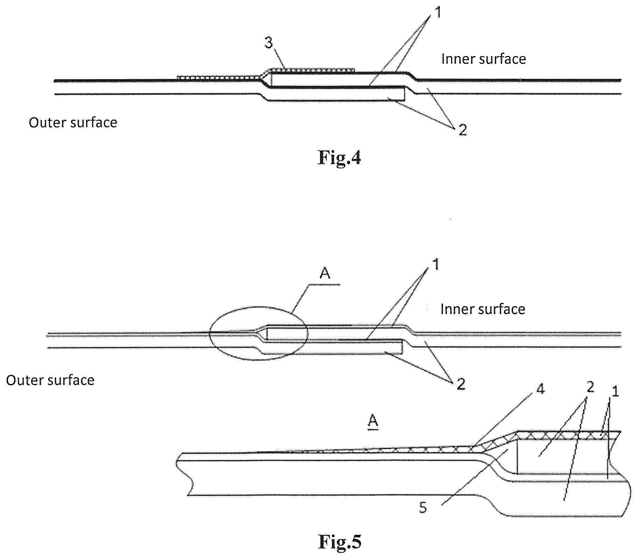

Figures 3 and 4 show a polymer tape application scheme to protect the end-face of the frame material. It is a method of end-face protection used in the production of packaging for liquid products. The method is based on the application of an additional, specially multi-layer material in the form of a polymeric tape with reduced elasticity for the possibility of its application. This method has a significant limitation: it is used to process the role web fed material / workpiece before it is divided into single products.

This method of protecting the end-face of the frame material creates an excessive thickness of the seam, which may impose restrictions on the types and methods of formation of packaging.

Fig. 5 schematically shows a preferred embodiment of the claimed invention, wherein no excess thickness is created in the place of fastening mating surfaces of a frame material and a protective layer, no additional materials are introduced an (as in the case of a fold), and the direction of the frame material fibers is not changed, which, in the conventionally known methods, changes the local physical and mechanical characteristics of the frame material in the place of the seam and may impose restrictions when rolling an the edge of the package, or during further formation of the package.

The shape-forming material of the container consists of a frame material 2 and a protective layer 1, applied from the inner side of the frame material 2, thereby forming an end-face 5 of the frame material. The protective layer 1 is extended by means of an elongated protective layer 4 in relation to the frame material 2 and, at the point where the shape-forming material overlaps to form the a seam, the elongated protective layer 4 is connected to the a mating layer of the shape-forming material. In this way, the end-face 5 of the frame material 2 is sealed by covering the end-face 5 with the elongated protective layer 4, without thickening the shape-forming material.

Further production of containers (packaging) is carried out in a conventional way with the selection of appropriate tools and welding modes of the frame material 2. Together with the welding of the frame material 2, the elongated protective layer 4 is welded to the mating surface to protect the welded area from contact with the external environment (e.g. the contents of the container) and to protect the end-face 5 of the frame material from contact with the contents of the container or the external environment.

## Claims

1. A packaging, being a paper cup, or being a container having a base, wherein the packaging has a sealed overlapped end-face (5) of a seam made of a shape-forming material consisting of a frame material (2) and a protective layer (1), wherein the protective layer (1) is applied only from an inner side of the frame material (2), is made elongated relative to a transverse length of the frame material (2) and in a region where the shape-forming material overlaps and which includes the package seam, the elongated protective layer (4) is welded to a mating portion of the protective layer (1) of the shape-forming material thereby sealing the seam, without touching the end-face (5) of the seam, wherein the seam is welded.

2. The packaging according to Claim 1, wherein the protective layer (1) is made of biodegradable polymer.

3. The packaging according to any of preceding Claims, wherein the packaging is the container.

4. The packaging according to Claim 3, wherein the base is round.

5. The packaging according to Claim 4, wherein the container is round.

6. The packaging according to Claim 1, wherein the packaging is the paper cup.

7. The packaging according to Claim 6, wherein the paper cup has a round base.

8. The packaging according to any of preceding Claims, having a rolled edge.

9. The packaging according to any of preceding Claims, wherein the packaging is a food container.

10. The packaging according to Claim 9, configured for frozen foodstuffs.

11. A method of fabricating the packaging of any of preceding Claims, wherein said seam and said seal are formed together by the welding.

## Patentansprüche

1. Verpackung, welche ein Papierbecher ist oder ein Behälter ist, welcher einen Boden aufweist, wobei die Verpackung eine abgedichtete überlappte Endfläche (5) eines Falzes aufweist, welcher aus einem formgebenden Material hergestellt ist, welches aus einem Rahmenmaterial (2) und einer Schutzschicht (1) besteht, wobei die Schutzschicht (1) nur von einer Innenseite des Rahmenmaterials (2) aufgebracht ist, relativ zu einer transversalen Länge des Rahmenmaterials (2) verlängert ausgeführt ist und in einem Bereich, in welchem das formgebende Material überlappt und welcher den Verpackungsfalz einschließt, die verlängerte Schutzschicht (4) mit einem korrespondierenden Abschnitt der Schutzschicht (1) des formgebenden Materials verschweißt ist, wodurch der Falz abgedichtet wird, ohne die Endfläche (5) des Falzes zu berühren, wobei der Falz verschweißt ist.

2. Verpackung nach Anspruch 1, wobei die Schutzschicht (1) aus einem biologisch abbaubaren Polymer hergestellt ist.

3. Verpackung nach einem der vorhergehenden Ansprüche, wobei die Verpackung der Behälter ist.

4. Verpackung nach Anspruch 3, wobei der Boden rund ist.

5. Verpackung nach Anspruch 4, wobei der Behälter rund ist.

6. Verpackung nach Anspruch 1, wobei die Verpackung der Papierbecher ist.

7. Verpackung nach Anspruch 6, wobei der Papierbecher einen runden Boden aufweist.

8. Verpackung nach einem der vorhergehenden Ansprüche, welche einen gerollten Rand aufweist.

9. Verpackung nach einem der vorhergehenden Ansprüche, wobei die Verpackung ein Lebensmittelbehälter ist.

10. Verpackung nach Anspruch 9, welche für tiefgekühlte Lebensmittel eingerichtet ist.

11. Verfahren zur Herstellung der Verpackung nach einem der vorhergehenden Ansprüche, wobei der Falz und die Abdichtung gemeinsam durch das Schweißen gebildet werden.

## Revendications

1. Emballage, sous forme de gobelet en papier, ou sous forme de récipient présentant une base, dans lequel l'emballage présente une face d'extrémité (5) superposée rendue étanche d'un joint réalisé en un matériau de mise en forme consistant en un matériau de structure (2) et une couche protectrice (1), dans lequel la couche protectrice (1) est appliquée uniquement depuis un côté intérieur du matériau de structure (2), est allongée par rapport à une longueur transversale du matériau de structure (2) et dans une région où le matériau de mise en forme se chevauche et qui inclut le joint d'emballage, la couche protectrice allongée (4) est soudée à une partie de contact de la couche protectrice (1) du matériau de mise en forme, rendant ainsi étanche le joint, sans toucher la face d'extrémité (5) du joint, dans lequel le joint est soudé.

2. Emballage selon la revendication 1, dans lequel la couche protectrice (1) est en polymère biodégradable.

3. Emballage selon l'une quelconque des revendications précédentes, dans lequel l'emballage est le récipient.

4. Emballage selon la revendication 3, dans lequel la base est ronde.

5. Emballage selon la revendication 4, dans lequel le récipient est rond.

6. Emballage selon la revendication 1, dans lequel l'emballage est le gobelet en papier.

7. Emballage selon la revendication 6, dans lequel le gobelet en papier présente une base ronde.

8. Emballage selon l'une quelconque des revendications précédentes, présentant un bord roulé.

9. Emballage selon l'une quelconque des revendications précédentes, dans lequel l'emballage est un récipient alimentaire.

10. Emballage selon la revendication 9, configuré pour des denrées alimentaires congelées.

11. Procédé de fabrication de l'emballage selon l'une quelconque des revendications précédentes, dans lequel ledit joint et ledit joint d'étanchéité sont formés ensemble par soudage.
